# EUROPÄISCHE PATENTSCHRIFT

(11) **EP 0 936 856 B1**
(45) Veröffentlichungstag und Bekanntmachung des Hinweises auf die Patenterteilung: **30.05.2001**
(21) Anmeldenummer: 97947029.1
(22) Anmeldetag: 27.10.1997
(51) Int. Cl.: A01N 25/10, C08G 69/44

(54) **PFLANZENBEHANDLUNGSMITTEL**
PLANT-TREATMENT AGENTS
AGENTS DE PHYTOTRAITEMENT

(30) Priorität: 07.11.1996 DE 19645842
(43) Veröffentlichungstag der Anmeldung: 25.08.1999
(73) Patentinhaber: BAYER AG, 51368 Leverkusen (DE)
(72) Erfinder: SIMON, Joachim, D-40589 Düsseldorf (DE); MÜLLER, Hanns, Peter, D-51519 Odenthal (DE); PRIESNITZ, Uwe, D-42657 Solingen (DE); RAST, Hans-Georg, D-51465 Bergisch Gladbach (DE)
(86) Internationale Anmeldenummer: EP9705932
(87) Internationale Veröffentlichungsnummer: WO9819531

(56) Entgegenhaltungen:
- EP-A- 0 542 080
- EP-A- 0 641 817
- DE-A- 4 239 181
- M.C. Tanzi, M. Levi, M. Muttoni, G. Tieghi, R. Fumero, Advanced Biomaterials (1987), No 7, Elsevier Science Publishers, Amsterdam, S. 427-432

## Beschreibung

Die vorliegende Erfindung betrifft neue Pflanzenbehandlungsmittel auf Basis von wirkstoffhaltigen, biologisch abbaubaren Polyesteramiden, ein Verfahren zu deren Herstellung und deren Verwendung zur Applikation von agrochemischen Wirkstoffen.

Es sind bereits zahlreiche thermoplastisch verarbeitbare Polymere bekannt, die agrochemische Wirkstoffe enthalten und im Pflanzenschutz einsetzbar sind (vgl. DE-A 4 002 736, US-A 4 743 448, US-A 4 666 767 und US-A 5 201 925). Ein Nachteil dieser Systeme besteht aber darin, daß sich vorher nicht absehen läßt, ob die aktiven Komponenten in genügender Menge über einen ausreichend langen Zeitraum verteilt freigesetzt werden. Außerdem verbleiben nach beendeter Behandlung noch Polymere und restliche Wirkstoffe im Boden oder an den Pflanzen, wo sie unerwünscht sind und in aufwendiger Weise entsorgt werden müssen.

Weiterhin sind polymere Trägermaterialien bekannt, die während oder nach ihrer Anwendung hydrolytisch, durch Enzyme und/oder durch Mikroorganismen teilweise oder vollständig abgebaut werden (vgl. Envir. Sci. and Techn. 7 (1973), 955, Coat Plast. Chem. 42 (1980), 436-440, Proc. Int. Symp. Contr. rel. Bioact. Mat. 12 (1985), 179, J. Appl. Pol. Sci. 28 (1983), 327-334, "Biomaterials", Thieme Verlag, Stuttgart-New York, 1987, Seiten 1-65, Chem. Soc. 1990, 127-148, Chem. Pharm. Bull. 37 (1989), 1954-1956 und Macromolecules 23 (1990), 26-31). Als Substanzen für derartige Systeme kommen zum Beispiel Polymilchsäuren und deren Copolymere, Polycaprolacton sowie Polyhydroxybutyrate und deren Copolymere in Betracht. Diese Polymeren sind bisher allerdings entweder nicht für eine wirtschaftliche Formulierung von agrochemischen Wirkstoffen geeignet oder aber die Freisetzung der Wirkstoffe erfolgt nicht in befriedigender Weise.

Darüber hinaus sind zahlreiche andere biologisch abbaubare Zubereitungen aus Trägermaterialien und agrochemischen Wirkstoffen beschrieben worden, aus denen die aktiven Komponenten unter den Anwendungsbedingungen freigesetzt werden. So kommen als Trägerstoffe zum Beispiel hydrophile Polymere auf Basis von Polysacchariden, wie Stärke, in Frage, in die zur mechanischen Stabilisierung und zur Regulierung der Wirkstoffabgabe wasserunlösliche Polymere in Form von Blends eingearbeitet sind (vgl. Biomaterials 10 (1989) 400-412). Die wirtschaftliche Herstellung und die biologische Abbaubarkeit dieser Zubereitungen läßt aber zu wünschen übrig (vgl. Studie der Europäischen Kommission Directorate General XII, EUR 16 102 EN).

Ferner lassen sich destrukturierte hydrophile Polymere in Kombination mit mindestens einem in Wasser unlöslichen, synthetischen und thermoplastischen Polymer als Trägersubstanzen für Wirkstoffe einsetzen (vgl. EP-A 0 344 118). Ebenso können Blends auf Basis von biologisch abbaubarer Stärke und synthetischen Polymeren, die mindestens eine freie Carboxylgruppe enthalten, für den angegebenen Zweck verwendet werden (vgl. EP-A 0 404 727). Nachteilig ist jedoch, daß jeweils nur die hydrophilen Polymerkomponenten biologisch abgebaut werden während die übrigen Polymer-Bestandteile als unerwünschte Rückstände verbleiben.

Schließlich ist auch bekannt, daß Fasern auf Basis von Polyhydroxyalkanolaten und Polysacchariden oder Copolymere auf Basis von Weinsäure und/oder Milchsäure als Träger bzw. Matrix für Wirkstoffe fungieren können (vgl. EP-A 0 132 299, EP-A 0-253 490, EP-A 0 126 827 und DE-A 3 936 191). Ungünstig ist aber, daß die Einarbeitung der Wirkstoffe Probleme aufwirft oder die Abbaubarkeit bzw. die Freisetzung der Wirkstoffe nicht immer ausreichend ist.

Es wurde nun neue Pflanzenbehandlungsmittel gefunden, die aus
- mindestens einem thermoplastisch verarbeitbaren, biologisch abbaubaren Polyesteramid, das sich ableitet von den nachfolgend definierten Monomeren, gegebenenfalls im Gemisch mit einer oder mehreren weiteren thermoplastisch verarbeitbaren, biologisch abbaubaren Polymerkomponenten,
- mindestens einem agrochemischen Wirkstoff und
- gegebenenfalls Zusatzstoffen
bestehen.

Weiterhin wurde gefunden, daß sich erfindungsgemäße Mittel herstellen lassen, indem man
a)
   - mindestens ein thermoplastisch verarbeitbares, biologisch abbaubares Polyesteramid, das sich ableitet von den nachfolgend definierten Monomeren, gegebenenfalls im Gemisch mit einer oder mehreren weiteren thermoplastisch verarbeitbaren, biologisch abbaubaren Polymerkomponenten,
   - mindestens einem agrochemischen Wirkstoff sowie
   - gegebenenfalls Zusatzstoffen
   vermengt und auf eine Temperatur zwischen 50°C und 180°C erhitzt und
b) die entstehende thermoplastisch verarbeitbare, homogene Mischung durch Extrudieren in Formkörper oder Folien überführt.

Schließlich wurde gefunden, daß sich die erfindungsgemäßen Pflanzenbehandlungsmittel sehr gut zur Applikation von agrochemischen Wirkstoffen in der Landwirtschaft, in der Fortwirtschaft oder im Gartenbau verwenden lassen.

Es ist als äußerst überraschend zu bezeichnen, daß sich die erfindungsgemäßen Mittel wesentlich besser zur Ausbringung von agrochemischen Wirkstoffen eignen als die konstitutionell ähnlichsten, vorbekannten Zubereitungen für den gleichen Zweck. Unerwartet ist auch, daß die erfindungsgemäßen Mittel in Wasser sowie unter feuchten und warmen Bedingungen stabil sind.

Die erfindungsgemäßen Mittel zeichnen sich durch eine Reihe von Vorteilen aus. So ermöglichen diese Zubereitungen eine kontinuierliche Wirkstoffabgabe über einen längeren Zeitraum. Dabei kann die Dosis an freigesetztem Wirkstoff durch die Abbaurate des Polymers den jeweiligen Bedürfnissen angepaßt werden. Günstig ist auch, daß die erfindungsgemäßen Mittel gegen Feuchtigkeit so stabil sind, daß eine vorzeitige Wirkstoffabgabe durch hydrolytische Zersetzung nicht zu befürchten ist. Schließlich besteht ein besonderer Vorteil darin, daß die als Matrix fungierenden Polymere unter den Anwendungsbedingungen vollständig biologisch abbaubar sind.

Die erfindungsgemäßen Pflanzenbehandlungsmittel enthalten einen oder mehrere thermoplastisch verarbeitbare, biologisch abbaubare Polyesteramide. Hierunter sind Polymere dieses Typs zu verstehen, die aliphatische Estergruppen und aliphatische Amid-Gruppen aufweisen und kompostierbar sind, also unter dem Einfluß von Mikroorganismen bereits unter milden Bedingungen vollständig abgebaut werden.

Bevorzugt sind derartige Polyesteramide mit statistischer Anordnung der Ester- und Amid-Segmente. Die erfindungsgemäßen Polyesteramide haben ein durchschnittliches Molekulargewicht zwischen 5 000 und 100 000, vorzugsweise zwischen 10 000 und 50 000, besonders bevorzugt zwischen 10 000 und 35 000, bezogen auf das Zahlenmittel-Molekulargewicht.

Eingesetzt werden Polyesteramide, die sich von Monomeren aus den Gruppen
- der Dialkohole, wie Ethylenglykol, 1,4-Butandiol, 1,3-Propandiol, 1,6-Hexandiol, Diethylenglykol usw.,
- der Trialkohole,
- der Dicarbonsäuren, wie Oxalsäure, Bernsteinsäure, Adipinsäure usw. bzw., derer Methyl-, Ethyl- usw, -Ester,
- der Hydroxycarbonsäuren, wie Milchsäure und der Lactone, wie Caprolacton usw.,
- der Aminoalkohole, wie Ethanolamin, Propanolamin usw.,
- der cyclischen Lactame, wie ε-Caprolactam, Laurinlactam usw.,
- der ω-Aminocarbonsäuren, wie Aminocapronsäure usw., und/oder
- von Mischungen (1:1-Salze) aus Dicarbonsäuren, wie Adipinsäure, Bernsteinsäure usw., und Diaminen, wie Hexamethylendiamin, Diaminobutan usw.,
   und/oder
- der hydroxyl- oder säureterminierten Polyester mit Molekulargewichten zwischen 200 und 10 000 als esterbildende Komponente
ableiten.

Bevorzugt sind Polyesteramide, die sich von
- cyclischen Lactamen, wie ε-Caprolactam, als amidbildende Komponente und
- 1,4-Butandiol und Adipinsäure als esterbildende Komponenten
ableiten und einen Esteranteil zwischen 30 und 80 Gew.-%, vorzugsweise zwischen 35 und 65 Gew.-%, besonders bevorzugt zwischen 35 und 55 Gew.-% aufweisen.

Die Polyesteramide können 0,1 bis 5 Gew.-%, vorzugsweise 0,1 bis 2 Gew.-% an Verzweigern enthalten. Als Verzweiger vorzugsweise in Betracht kommen trifunktionelle Alkohole, wie Trimethylolpropan oder Glycerin, ferner tetrafunktionelle Alkohole, wie Pentaerythrit, und auch trifunktionelle Carbonsäuren, wie Citronensäure.

Die in den-erfindungsgemäßen Pflanzenbehandlungsmitteln enthaltenen Polyesteramide sind bekannt oder lassen sich nach bekannten Methoden herstellen (vgl. EP-A 0 641 817).

Als Zumischkomponenten, die in den Polyesteramiden enthalten sein können, kommen übliche thermoplastisch verarbeitbare und biologisch abbaubare Polymere in Betracht. Vorzugsweise in Frage kommen Polyester, Polyetherester, Copolyester, Polyanhydride, Polyesterurethan-harnstoffe, Polyesterurethane, thermoplastische Polysaccharide oder Polysaccharid-Derivate, und auch Polyester, Polyetherester und Polyesteramide, die aliphatische und aromatische Estergruppierungen enthalten.

Besonders bevorzugte Zumischkomponenten sind Polyester, wie Polylactid, Polyglycolid, Polycaprolacton, Polyhydroxyalkanolate, Polyasparaginsäure und Polytartrate, ferner thermoplastische Polysaccharide, wie Celluloseester, Cellulosether, Celluloseetherester und Stärke-Derivate, wie Stärkeester, und auch thermoplastische Stärke.

Der Gehalt an zusätzlichen Polymerkomponenten in den Polyesteramiden kann innerhalb eines größeren Bereichs variiert werden, und zwar im allgemeinen zwischen 1 und 80 Gew.-%, vorzugsweise zwischen 5 und 50 Gew.-%.

Die erfindungsgemäßen Pflanzenbehandlungsmittel enthalten einen oder mehrere agrochemische Wirkstoffe.

Unter agrochemischen Wirkstoffen sind im vorliegenden Zusammenhang alle zur Pflanzenbehandlung üblichen Substanzen zu verstehen. Vorzugsweise genannt seien Fungizide, Bakterizide, Insektizide, Akarizide, Nematizide, Herbizide, Pflanzenwuchsregulatoren und Pflanzennährstoffe.

Als Beispiele für Fungizide seien genannt:
2-Aminobutan; 2-Anilino-4-methyl-6-cyclopropyl-pyrimidin; 2',6'-Dibromo-2-methyl-4'-trifluoromethoxy-4'-trifluoromethyl-1,3-thiazol-5-carboxanilid; 2,6-Dichloro-N-(4-trifluoromethylbenzyl)-benzamid; (E)-2-Methoximino-N-methyl-2-(2-phenoxyphenyl)-acetamid; 8-Hydroxychinolinsulfat; Methyl-(E)-2-{2-[6-(2-cyanophenoxy)-pyrimidin-4-yloxy]-phenyl}-3-methoxyacrylat; Methyl-(E)-methoximino[alpha-(o-tolyloxy)-o-tolyl]-acetat; 2-Phenylphenol (OPP), Aldimorph, Ampropylfos, Anilazin, Azaconazol,
Benalaxyl, Benodanil, Benomyl, Binapacryl, Biphenyl, Bitertanol, Blasticidin-S, Bromuconazole, Bupirimate, Buthiobate,
Calciumpolysulfid, Captafol, Captan, Carbendazim, Carboxin, Chinomethionat (Quinomethionat), Chloroneb, Chloropicrin, Chlorothalonil, Chlozolinat, Cufraneb, Cymoxanil, Cyproconazole, Cyprofuram,
Dichlorophen, Diclobutrazol, Dichlofluanid, Diclomezin, Dicloran, Diethofencarb, Difenoconazol, Dimethirimol, Dimethomorph, Diniconazol, Dinocap, Diphenylamin, Dipyrithion, Ditalimfos, Dithianon, Dodine, Drazoxolon,
Edifenphos, Epoxyconazole, Ethirimol, Etridiazol,
Fenarimol, Fenbuconazole, Fenfuram, Fenitropan, Fenpiclonil, Fenpropidin, Fenpropimorph, Fentinacetat, Fentinhydroxyd, Ferbam, Ferimzone, Fluazinam, Fludioxonil, Fluoromide, Fluquinconazole, Flusilazole, Flusulfamide, Flutolanil, Flutriafol, Folpet, Fosetyl-Aluminium, Fthalide, Fuberidazol, Furalaxyl, Furmecyclox,
Guazatine,
Hexachlorobenzol, Hexaconazol, Hymexazol,
Imazalil, Imibenconazol, Iminoctadin, Iprobenfos (IBP), Iprodion, Isoprothiolan, Kasugamycin, Kupfer-Zubereitungen, wie: Kupferhydroxid, Kupfernaphthenat, Kupferoxychlorid, Kupfersulfat, Kupferoxid, Oxin-Kupfer und Bordeaux-Mischung,
Mancopper, Mancozeb, Maneb, Mepanipyrim, Mepronil, Metalaxyl, Metconazol, Methasulfocarb, Methfuroxam, Metiram, Metsulfovax, Myclobutanil,
Nickeldimethyldithiocarbamat, Nitrothal-isopropyl, Nuarimol,
Ofurace, Oxadixyl, Oxamocarb, Oxycarboxin,
Pefurazoat, Penconazol, Pencycuron, Phosdiphen, Pimaricin, Piperalin, Polyoxin, Probenazol, Prochloraz, Procymidon, Propamocarb, Propiconazole, Propineb, Pyrazophos, Pyrifenox, Pyrimethanil, Pyroquilon,
Quintozen (PCNB),
Schwefel und Schwefel-Zubereitungen,
Tebuconazol, Tecloftalam, Tecnazen, Tetraconazol, Thiabendazol, Thicyofen, Thiophanat-methyl, Thiram, Tolclophos-methyl, Tolylfluanid, Triadimefon, Triadimenol, Triazoxid, Trichlamid, Tricyclazol, Tridemorph, Triflumizol, Triforin, Triticonazol,
Validamycin A, Vinclozolin,
Zineb, Ziram,
8-tert-Butyl-2-(N-ethyl-N-n-propyl-amino)-methyl-1,4-dioxa-spiro-[4,5]decan,
N-(R)-(1-(4-Chlorphenyl)-ethyl)-2,2-dichlor-1-ethyl-3t-methyl-1r-cyclopropancarbonsäureamid (Diastereomerengemisch oder einzelne Isomere),
[2-Methyl-1-[[[1-(4-methylphenyl)-ethyl]-amino]-carbonyl]-propyl]-carbaminsäure-1-methylethylester und
1-Methyl-cyclohexyl-1-carbonsäure-(2,3-dichlor-4-hydroxy)-anilid.

Als Beispiele für Bakterizide seien genannt:

Bronopol, Dichlorophen, Nitrapyrin, Nickel-Dimethyldithiocarbamat, Kasugamycin, Octhilinon, Furancarbonsäure, Oxytetracyclin, Probenazol, Streptomycin, Tecloftalam, Kupfersulfat und andere Kupfer-Zubereitungen.

Als Beispiele für Insektizide, Akarizide und Nematizide seien genannt:
Abamectin, Acephat, Acrinathrin, Alanycarb, Aldicarb, Alphamethrin, Amitraz, Avermectin, AZ 60541, Azadirachtin, Azinphos A, Azinphos M, Azocyclotin, Bacillus thuringiensis, 4-Bromo-2-(4-chlorphenyl)-1-(ethoxymethyl)-5-(trifluoromethyl)-lH-pyrrolo-3-carbonitrile, Bendiocarb, Benfuracarb, Bensultap, Betacyfluthrin, Bifenthrin, BPMC, Brofenprox, Bromophos A, Bufencarb, Buprofezin, Butocarboxin, Butylpyridaben,
Cadusafos, Carbaryl, Carbofuran, Carbophenothion, Carbosulfan, Cartap, Chloethocarb, Chloretoxyfos, Chlorfenvinphos, Chlorfluazuron, Chlormephos, N-[(6-Chloro-3-pyridinyl)-methyl]-N'-cyano-N-methyl-ethanimidamide, Chlorpyrifos, Chlorpyrifos M, Cis-Resmethrin, Clocythrin, Clofentezin, Cyanophos, Cycloprothrin, Cyfluthrin, Cyhalothrin, Cyhexatin, Cypermethrin, Cyromazin,
Deltamethrin, Demeton-M, Demeton-S, Demeton-S-methyl, Diafenthiuron, Diazinon, Dichlofenthion, Dichlorvos, Dicliphos, Dicrotophos, Diethion, Diflubenzuron, Dimethoat,
Dimethylvinphos, Dioxathion, Disulfoton,
Edifenphos, Emamectin, Esfenvalerat, Ethiofencarb, Ethion, Ethofenprox, Ethoprophos, Etrimphos,
Fenamiphos, Fenazaquin, Fenbutatinoxid, Fenitrothion, Fenobucarb, Fenothiocarb, Fenoxycarb, Fenpropathrin, Fenpyrad, Fenpyroximat, Fenthion, Fenvalerate, Fipronil, Fluazinam, Fluazuron, Flucycloxuron, Flucythrinat, Flufenoxuron, Flufenprox, Fluvalinate, Fonophos, Formothion, Fosthiazat, Fubfenprox, Furathiocarb,
HCH, Heptenophos, Hexaflumuron, Hexythiazox,
Imidacloprid, Iprobenfos, Isazophos, Isofenphos, Isoprocarb, Isoxathion, Ivermectin, Lambda-cyhalothrin, Lufenuron,
Malathion, Mecarbam, Mevinphos, Mesulfenphos, Metaldehyd, Methacrifos, Methamidophos, Methidathion, Methiocarb, Methomyl, Metolcarb, Milbemectin, Monocrotophos, Moxidectin,
Naled, NC 184, Nitenpyram,
Omethoat, Oxamyl, Oxydemethon M, Oxydeprofos,
Parathion A, Parathion M, Permethrin, Phenthoat, Phorat, Phosalon, Phosmet, Phosphamidon, Phoxim, Pirimicarb, Pirimiphos M, Pirimiphos A, Profenophos, Promecarb, Propaphos, Propoxur, Prothiophos, Prothoat, Pymetrozin, Pyrachlophos, Pyridaphenthion, Pyresmethrin, Pyrethrum, Pyridaben, Pyrimidifen, Pyriproxifen,
Quinalphos,
Salithion, Sebufos, Silafluofen, Sulfotep, Sulprofos,
Tebufenozide, Tebufenpyrad, Tebupirimiphos, Teflubenzuron, Tefluthrin, Temephos, Terbam, Terbufos, Tetrachlorvinphos, Thiafenox, Thiodicarb, Thiofanox, Thiomethon, Thionazin, Thuringiensin, Tralomethrin, Triarathen, Triazophos, Triazuron, Trichlorfon, Triflumuron, Trimethacarb,
Vamidothion, XMC, Xylylcarb, Zetamethrin.

Als Beispiele für Herbizide seien genannt:

Anilide, wie z.B. Diflufenican und Propanil; Arylcarbonsäuren, wie z.B. Dichlorpicolinsäure, Dicamba und Picloram; Aryloxyalkansäuren, wie z.B. 2,4-D, 2,4-DB, 2,4-DP, Fluroxypyr, MCPA, MCPP und Triclopyr; Aryloxy-phenoxyalkansäureester, wie z.B. Diclofop-methyl, Fenoxaprop-ethyl, Fluazifop-butyl, Haloxyfop-methyl und Quizalofop-ethyl; Azinone, wie z.B. Chloridazon und Norflurazon; Carbamate, wie z.B. Chlorpropham, Desmedipham, Phenmedipham und Propham; Chloracetanilide, wie z.B. Alachlor, Acetochlor, Butachlor, Metazachlor, Metolachlor, Pretilachlor und Propachlor; Dinitroaniline, wie z.B. Oryzalin, Pendimethalin und Trifluralin; Diphenylether, wie z.B. Acifluorfen, Bifenox, Fluoroglycofen, Fomesafen, Halosafen, Lactofen und Oxyfluorfen; Harnstoffe, wie z.B. Chlortoluron, Diuron, Fluometuron, Isoproturon, Linuron und Methabenzthiazuron; Hydroxylamine, wie z.B. Alloxydim, Clethodim, Cycloxydim, Sethoxydim und Tralkoxydim; Imidazolinone, wie z.B. Imazethapyr, Imazamethabenz, Imazapyr und Imazaquin; Nitrile, wie z.B. Bromoxynil, Dichlobenil und Ioxynil; Oxyacetamide, wie z.B. Mefenacet; Sulfonylharnstoffe, wie z.B. Amidosulfuron, Bensulfuron-methyl, Chlorimuron-ethyl, Chlorsulfuron, Cinosulfuron, Metsulfuron-methyl, Nicosulfuron, Primisulfuron, Pyrazosulfuron-ethyl, Thifensulfuron-methyl, Triasulfuron und Tribenuron-methyl; Thiolcarbamate, wie z.B. Butylate, Cycloate, Diallate, EPTC, Esprocarb, Molinate, Prosulfocarb, Thiobencarb und Triallate; Triazine, wie z.B. Atrazin, Cyanazin, Simazin, Simetryne, Terbutryne und Terbutylazin; Triazinone, wie z.B. Hexazinon, Metamitron und Metribuzin; Sonstige, wie z.B. Aminotriazol, Benfuresate, Bentazone, Cinmethylin, Clomazone, Clopyralid, Difenzoquat, Dithiopyr, Ethofumesate, Fluorochloridone, Glufosinate, Glyphosate, Isoxaben, Pyridate, Quinchlorac, Quinmerac, Sulphosate und Tridiphane.

Als Beispiele für Pflanzenwuchsregulatoren seien Chlorcholinchlorid und Ethephon genannt.

Als Beispiele für Pflanzennährstoffe seien übliche anorganische oder organische Dünger zur Versorgung von Pflanzen mit Makro- und/oder Mikronährstoffen genannt.

Als Zusatzstoffe, die in den erfindungsgemäßen Pflanzenbehandlungsmitteln enthalten sein können, kommen alle üblichen in derartigen Zubereitungen einsetzbaren Stoffe in Frage. Vorzugsweise in Betracht kommen Füllstoffe, aus der Kunststoff-Technologie bekannte Schmier- und Gleitmitteln, Weichmacher und Stabilisierungsmittel.

Als Beispiele für Füllstoffe seien genannt: Kochsalz, Carbonate, wie Calciumcarbonat oder Natriumhydrogencarbonat, ferner Aluminiumoxide, Kieselsäuren, Tonerden, gefälltes oder kolloidales Siliciumdioxid, sowie Phosphate.

Als Beispiele für Schmier- und Gleitmittel seien genannt: Magnesiumstearat, Sterarinsäure, Talkum und Bentonite.

Als Weichmacher in Frage kommen alle Stoffe, die in üblicherweise für diesen Zweck bei Polyesteramiden verwendet werden.

Als Beispiele genannt seien Ester von Phosphorsäure, Ester von Phthalsäure, wie Dimethylphthalat und Dioctylphthalat, und Ester von Adipinsäure, wie Diisobutyladipat, ferner Ester von Azelainsäure, Apfelsäure, Citronensäure, Maleinsäure, Ricinolsäure, Myristinsäure, Palmitinsäure, Ölsäure, Sebacinsäure. Stearinsäure und Trimellithsäure, sowie komplexe lineare Polyester, polymere Weichmacher und epoxydierte Sojabohnenöle.

Als Stabilisierungsmittel kommen Antioxydantien und Stoffe in Frage, welche die Polymeren vor unerwünschtem Abbau während der Verarbeitung schützen.

Als Farbstoffe können in den erfindungsgemäßen Mitteln alle für Pflanzenbehandlungsmittel üblicherweise einsetzbaren Farbstoffe enthalten sein.

Die Konzentrationen an den einzelnen Komponenten können in den erfindungsgemäßen Mitteln innerhalb eines größeren Bereiches variiert werden. So liegt der Gehalt
- an Polyesteramiden, gegebenenfalls im Gemisch mit zusätzlichen Polymerkomponenten, im allgemeinen zwischen 60 und 99 Gew.-%, vorzugsweise zwischen 70 und 95 Gew.-%,
- an agrochemischen Wirkstoffen im allgemeinen zwischen 1 und 30 Gew.-%, vorzugsweise zwischen 1 und 20 Gew.-% und
- an Zusatzstoffen im allgemeinen zwischen 0 und 30 Gew.-%, vorzugsweise zwischen 0 und 20 Gew.-%.

Bei der Durchführung des erfindungsgemäßen Verfahrens geht man im allgemeinen in der Weise vor, daß man die Komponenten in den gewünschten Mengen in beliebiger Reihenfolge miteinander vermischt und dann unter Rühren oder Kneten auf Temperaturen zwischen 50°C und 180°C, vorzugsweise zwischen 60°C und 160°C erhitzt. Die dabei entstehende pastöse Masse oder flüssige Mischung kann nach den für thermoplastisch verarbeitbare Polymere üblichen Methoden mit Hilfe von Düsen, Pressen oder anderen gegeigneten Vorrichtungen in Formkörper oder Folien überführt werden. Unter Formkörper sind in diesem Zusammenhang Stäbe, Platten, Fasern, Bänder, Netze, Granulate oder andere Formkörper zu verstehen. Es ist ferner möglich, die erhaltenen Produkte in festem Zustand zu Pulvern zu vermahlen. Außerdem lassen sich Anzuchtgefäße für Pflanzen, wie Töpfe oder Wannen, herstellen. Im übrigen können auch andere Stoffe mit erfindungsgemäßen Mitteln beschichtet werden.

Zur Durchführung des erfindungsgemäßen Verfahrens kommen alle für die Verarbeitung von thermoplastischen Materialien üblichen Vorrichtungen in Betracht. Im allgemeinen arbeitet man in heizbaren Misch- oder Knetapparaten und/oder Extrudern.

Die erfindungsgemäßen Mittel können als solche oder in Form von daraus hergestellten üblichen Formulierungen, wie Granulaten, Spritzmitteln, Pulvern oder Pasten, auf die Pflanzen und/oder deren Lebensraum ausgebracht werden.

So können die erfindungsgemäßen Mittel zum Beispiel zum Einbringen von agrochemischen Wirkstoffen in den Boden eingesetzt werden. Sie werden dazu als Depot-Zubereitungen in der Nähe der Wurzeln der zu behandelnden Pflanzen, zum Beispiel in Form von Mehlen, Stäuben oder Granulaten in die Erde eingearbeitet oder als Stäbe, Kugeln, Tabletten oder andere Formkörper in die Erde gesteckt.

Die erfindungsgemäßen Mittel können auch zur Behandlung einzelner Pflanzen, wie z.B. Bäumen, eingesetzt werden. Sie werden dafür bevorzugt in Form geeigneter Formkörper, wie Stäben, Tabletten, Platten, Folien, Fliesen, Geweben, Streifen, Nieten, Nägeln, Klammern, Stiften, Nadeln, Hohlnägeln oder Drähten, in den Saftstrom der Pflanzen eingebracht. Die Formkörper werden dazu entweder in entsprechend hergestellte Hohlräume in die Pflanze eingebracht oder einfach in das Pflanzengewebe gedrückt, gepresst oder geschlagen. Sie können auch unter sorgfältig gelöste Rinde oder Pflanzenteile geschoben werden, wobei die Rinde oder die Pflanzenteile anschließend wieder zur Abdeckung dienen.

Die erfindungsgemäßen Mittel lassen sich auch zur Herstellung transcuticulärer Formulierungen verwenden. Dazu werden sie in Form von Anstrichen, filmbildenden Pasten, Filmen, Folien oder Pflastern auf die Pflanzenoberfläche aufgebracht.

Die Aufwandmenge an erfindungsgemäßen Mitteln kann innerhalb eines größeren Bereiches variiert werden. Sie richtet sich nach den jeweiligen Wirkstoffen und nach deren Gehalt in den Mitteln.

Die Erfindung wird durch die folgenden Beispiele veranschaulicht.

### Herstellungsbeispiele

### Beispiel 1

a) Herstellung von Polyesteramid aus einem säureterminierten Oligoester aus Adipinsäure und Butandiol sowie aus ε-Caprolactam mit einem Esteranteil von 40 Gew.-%. 565,8 g (5 mol) ε-Caprolactam, 292 g (2 mol) Adipinsäure und 180 g (2 mol) 1,4-Butandiol werden zusammengegeben und im Autoklaven unter Eigendruck langsam auf 170°C hochgeheizt. Nach einer Zeit von 3 Stunden wird entspannt und Wasser abdestilliert. Abhängig von der Heftigkeit der Destillation wird auf 220°C hochgeheizt und Vakuum angelegt. Zum Schluß wird mit Ölpumpenvakuum 4 Stunden bei 240°C auspolymerisiert. Man erhält ein hellgelbes Produkt, das sich granulieren läßt. Der Schmelzpunkt laut DSC beträgt 123°C. Die relative Viskosität (1 gew.-%ig in m-Kresol bei 25°C) beträgt 2,8.
   Das erhaltene, biologisch abbaubare Produkt wird weiterhin als Polyesteramid I bezeichnet.
b) 90 g Polyesteramid I und 10 g Imidacloprid werden bei 130°C Massetemperatur mit 50 U/min in einem Knetapparat 30 Minuten lang geknetet. Es entsteht eine homogene, thermoplastisch verformbare Masse, die in einer beheizbaren Presse bei 150°C zu einer 1 mm dicken Folie verarbeitet wird, woraus 10 x 10 x 1 mm großen Plättchen geschnitten werden.

### Beispiel 2

95 g Polyesteramid I und 5 g Imidacloprid werden bei 130°C Massetemperatur mit 50 U/min in einem Knetapparat 30 Minuten lang geknetet. Es entsteht eine homogene, thermoplastisch verformbare Masse, die in einer beheizbaren Presse bei 150°C zu einer 1 mm dicken Folie verarbeitet wird, woraus 10 x 10 x 1 mm großen Plättchen geschnitten werden.

### Beispiel 3

90 g Polyesteramid I und 5 g 2,6-Dichlorbenzonitril werden bei 130°C Massetemperatur mit 50 U/min in einem Knetapparat 30 Minuten lang geknetet. Es entsteht eine homogene, thermoplastisch verformbare Masse, die in einer beheizbaren Presse bei 150°C zu einer 1 mm dicken Folie verarbeitet wird, woraus 10 x 10 x 1 mm große Plättchen geschnitten werden.

### Beispiel 4

90 g Polyesteramid I und 5 g Tebuconazol werden bei 130°C Massetemperatur mit 50 U/min in einem Knetapparat 30 Minuten lang geknetet. Es entsteht eine homogene, thermoplastisch verformbare Masse, die in einer beheizbaren Presse bei 150°C zu einer 1 mm dicken Folie verarbeitet wird, woraus 10 x 10 x 1 mm große Plättchen geschnitten werden.

### Beispiele 5 bis 9

Stärke und Glycerin werden in den in der folgenden Tabelle angegebenen Mengen auf einem Kneter vorgelegt und bei 100-140°C Massetemperatur 5 Minuten lang geknetet. Anschließend fügt man Polyesteramid I und Imidachloprid in den in der folgenden Tabelle angegebenen Mengen hinzu und knetet bei 50 U/min jeweils 30 Minuten bei 140°C. Es entsteht jeweils eine homogene, thermoplastisch verformbare Masse, die in einer beheizbaren Presse bei 150°C zu einer 1 mm dicken Folie verarbeitet wird, woraus 10 x 10 x 1 mm große Plättchen geschnitten werden.

**Tabelle 1**

| Beispiel Nr. | Imidacloprid Gew.-% | Polyesteramid I Gew.-% | Stärke Gew.-% | Glycerin Gew.-% |
|---|---|---|---|---|
| 5 | 5 | 89,5 | 5 | 0,5 |
| 6 | 5 | 84 | 10 | 1 |
| 7 | 5 | 73 | 20 | 2 |
| 8 | 5 | 51 | 40 | 4 |
| 9 | 5 | 29 | 60 | 6 |

### Verwendungsbeispiele

### Beispiel A

Nach der HPLC-Methode wird der Wirkstoffgehalt der im Beispiel 2 beschriebenen Plättchen bestimmt. Es ergibt sich ein Gehalt von 48 mg Imidacloprid pro Gramm.

Man gibt eines dieser Plättchen in Wasser und rührt bei 20°C mit einer Geschwindigkeit von 1 U/s. In Abständen von jeweils 24 Stunden wird der Wirkstoffgehalt im Wasser nach der HPLC-Methode bestimmt. Es ergibt sich, daß nach 192 Stunden über 95 % des Imidaclopriods freigesetzt wurden.

### Beispiel B

Plättchen gemäß Beispiel 2 werden in Kompost gegeben und dort 7 Tage lang bei 37°C belassen. Danach wird der Gehalt an freigesetztem Imidacloprid bestimmt. Es ergibt sich, daß 76 % des Imidacloprids freigesetzt wurden.

### Beispiel C

Plättchen gemäß Beispiel 2 werden in mikrobiell nicht aktiven (vergifteten) Kompost gegeben und dort 7 Tage lang bei 37°C belassen. Danach wird der Gehalt an freigesetztem Imidacloprid bestimmt. Es ergibt sich, daß 10 % des Imidacloprids freigesetzt wurden.

### Beispiel D

Plättchen gemäß Beispiel 3 werden nach üblichen Methoden unter Kühlung gemahlen. Das Mahlgut wird auf seinen Gehalt an 2,6-Dichlorbenzonitril analytisch untersucht.

Gehalt an 2,6-Dichlorbenzonitril
- vor der Mahlung: 5,3 Gew.-%
- nach der Mahlung 4,0 Gew.-%. 3 g des Mahlgutes werden bei Raumtemperatur über einen Zeitraum von 3 Tagen einem Luftstrom von 400 Litern ausgesetzt. Danach wird das Granulat auf seinen Gehalt an 2,6-Dichlorbenzonitril analysiert; er beträgt 3,8 Gew.-%. Daraus ergibt sich, daß 5 % des 2,6-Dichlorbenzonitrils freigesetzt wurden.

### Vergleichsbeispiele

### Vergleichsbeispiel 1

90 g biologisch abbaubares Polylactid (Cargill) und 5 g Imidacloprid werden bei 150°C Massetemperatur mit 50 U/min in einem Knetapparat 30 Minuten lang geknetet. Es entsteht eine homogene, thermoplastisch verformbare Masse, die in einer beheizbaren Presse bei 140°C zu einer 1 mm dicken Folie verarbeitet wird, woraus 10 x 10 x 1 mm große Plättchen geschnitten werden.

Nach der HPLC-Methode wird der Wirkstoffgehalt dieser Plättchen bestimmt. Es ergibt sich ein Gehalt von 48 mg Imidacloprid pro Gramm.

Man gibt eines dieser Plättchen in Wasser und rührt bei 20°C mit einer Geschwindigkeit von 1 U/s. In Abständen von jeweils 24 Stunden wird der Wirkstoffgehalt im Wasser nach der HPLC-Methode bestimmt. Es ergibt sich, daß auch nach 288 Stunden kein Imidacloprid freigesetzt wurde.

### Vergleichsbeispiel 2

Man gibt eines der im Vergleichsbeispiel 1 beschriebenen Plättchen in Wasser und rührt bei 40°C mit einer Geschwindigkeit von 1 U/s. In Abständen von jeweils 24 Stunden wird der Wirkstoffgehalt im Wasser nach der HPLC-Methode bestimmt. Es ergibt sich, daß auch nach 168 Stunden kein Imidacloprid freigesetzt wurde.

### Vergleichsbeispiel 3

Man gibt eines der im Vergleichsbeispiel 1 beschriebenen Plättchen in Wasser und rührt bei 60°C mit einer Geschwindigkeit von 1 U/s. In Abständen von jeweils 24 Stunden wird der Wirkstoffgehalt im Wasser nach der HPLC-Methode bestimmt. Es ergibt sich, daß nach 168 Stunden 18 % des Imidacloprids freigesetzt wurden.

### Vergleichsbeispiel 4

Plättchen gemäß Vergleichsbeispiel 1 werden in Kompost gegeben und dort 7 Tage lang bei 37°C belassen. Danach wird der Gehalt an freigesetztem Imidacloprid bestimmt. Es ergibt sich, daß 4 % des Imidacloprids freigesetzt wurden.

### Vergleichsbeispiel 5

Plättchen gemäß Vergleichsbeispiel 1 werden in mikrobiell nicht aktiven (vergifteten) Kompost gegeben und dort 7 Tage lang bei 37°C belassen. Danach wird der Gehalt an freigesetztem Imidacloprid bestimmt. Es ergibt sich. daß 4 % des Imidacloprids freigesetzt wurden.

### Vergleichsbeispiel 6

Ein Granulat, das die gleiche Korngröße wie das im Beispiel D beschriebene Mahlgut aufweist, wird an der Oberfläche mit 5 Gew.-% 2,6-Dichlorbenzonitril beschichtet. 3 g dieses Granulates werden bei Raumtemperatur über einen Zeitraum von 3 Tagen einem Luftstrom von 400 Litern ausgesetzt. Danach wird das Granulat auf seinen Gehalt an 2,6-Dichlorbenzonitril analysiert; er beträgt 3,5 Gew.-%. Daraus ergibt sich, daß 30 Gew.-% des 2,6-Dichlorbenzontrils freigesetzt wurden.

## Patentansprüche

1. Pflanzenbehandlungsmittel, bestehend aus
- mindestens einem thermoplastisch verarbeitbaren, biologisch abbaubaren Polyesteramid, das ein durchschnittliches Molekulargewicht zwischen 5 000 und 100 000 aufweist und sich ableitet von Monomeren aus den Gruppen
- der Dialkohole,
- der Trialkohole,
- der Dicarbonsäuren und deren Ester,
- der Hydroxycarbonsäuren,
- der Lactone,
- der Aminoalkohole,
- der cyclischen Lactame,
- der ω-Aminocarbonsäuren,
- von Mischungen (1:1-Salzen) aus Dicarbonsäuren und Diaminen und/oder
- der hydroxyl- oder säureterminierten Polyester mit Molekulargewichten zwischen 200 und 10 000,
gegebenenfalls im Gemisch mit einer oder mehreren weiteren thermoplastisch verarbeitbaren, biologisch abbaubaren Polymerkomponenten,
- mindestens einem agrochemischem Wirkstoff und
- gegebenenfalls Zusatzstoffen.

2. Mittel gemäß Anspruch 1, dadurch gekennzeichnet, dass die enthaltenen Polyesteramide sich ableiten von Monomeren
- aus der Gruppe der cyclischen Lactame,
- 1,4-Butandiol und Adipinsäure
und einen Esteranteil zwischen 30 und 80 Gew.-% aufweisen.

3. Mittel gemäß Anspruch 1, dadurch gekennzeichnet, dass als Zumisch-Komponenten thermoplastisch verarbeitbare, biologisch abbaubare Polyester, Polyetherester, Copolyester, Polyanhydride, Polyester-urethan-harnstoffe, Polyesterurethane, thermoplastische Polysaccharide und/oder Polysaccharid-Derivate enthalten sind.

4. Mittel gemäß Anspruch 1, dadurch gekennzeichnet, dass als Zumisch-Komponenten thermoplastisch verarbeitbare, biologisch abbaubare Polyester, Polyetherester und/oder Polyesteramide enthalten sind, die aliphatische und aromatische Estergruppen aufweisen.

5. Mittel gemäß Anspruch 1, dadurch gekennzeichnet, dass Fungizide, Bakterizide, Insektizide, Akarizide, Nematizide, Herbizide, Pflanzenwuchsregulatoren und/oder Pflanzennährstoffe als agrochemische Wirkstoffe enthalten sind.

6. Mittel gemäß Anspruch 1, dadurch gekennzeichnet, dass Imidacloprid als agrochemischer Wirkstoff enthalten ist.

7. Verfahren zur Herstellung von Mitteln gemäß Anspruch 1, dadurch gekennzeichnet, dass man
a)
- mindestens ein thermoplastisch verarbeitbares, biologisch abbaubares Polyesteramid, das ein durchschnittliches Molekulargewicht zwischen 5 000 und 100 000 aufweist und sich ableitet von Monomeren aus den Gruppen
- der Dialkohole,
- der Trialkohole,
- der Dicarbonsäuren und deren Ester,
- der Hydroxycarbonsäuren,
- der Lactone,
- der Aminoalkohole,
- der cyclischen Lactame,
- der ω-Aminocarbonsäuren,
- von Mischungen (1:1-Salzen) aus Dicarbonsäuren und Diaminen und/oder
- der hydroxyl- oder säureterminierten Polyester mit Molekulargewichten zwischen 200 und 10 000,
gegebenenfalls im Gemisch mit einer oder mehreren weiteren thermoplastisch verarbeitbaren, biologisch abbaubaren Polymerkomponenten,
- mindestens einem agrochemischem Wirkstoff und
- gegebenenfalls Zusatzstoffen
vermengt und auf eine Temperatur zwischen 50°C und 180°C erhitzt und
b) die entstehende thermoplastisch verarbeitbare, homogene Mischung durch Extrudieren in Formkörper oder Folien überführt.

8. Verwendung von Mitteln gemäß Anspruch 1 zur Applikation von agrochemischen Wirkstoffen.

## Claims

1. Plant-treatment compositions comprising
- at least one thermoplastically processable biodegradable polyester amide, which has an average molecular weight of between 5000 and 100,000 and is derived from monomers from the groups
- of the dialcohols,
- of the trialcohols,
- of the dicarboxylic acids and their esters,
- of the hydroxycarboxylic acids,
- of the lactones,
- of the aminoalcohols,
- of the cyclic lactams,
- of the ω-aminocarboxylic acids,
- of mixtures (1:1 salts) of dicarboxylic acids and diamines and/or
- of hydroxyl- or acid-capped polyesters having molecular weights of between 200 and 10,000,
optionally in a mixture with one or more other thermoplastically processable biodegradable polymer components,
- at least one agrochemically active compound and
- optionally additives.

2. Compositions according to Claim 1, characterized in that the polyester amides contained therein are derived from monomers
- of the group of the cyclic lactams,
- of 1,4-butanediol and adipic acid
and have a proportion of ester of between 30 and 80% by weight.

3. Compositions according to Claim 1, characterized in that thermoplastically processable biodegradable polyesters, polyether esters, copolyesters, polyanhydrides, polyester urethane-ureas, polyester urethanes, thermoplastic polysaccharides and/or polysaccharide derivatives are contained therein as co-components.

4. Compositions according to Claim 1, characterized in that thermoplastically processable biodegradable polyesters, polyether esters and/or polyester amides which have aliphatic and aromatic ester groups are contained therein as co-components.

5. Compositions according to Claim 1, characterized in that fungicides, bactericides, insecticides, acaricides, nematicides, herbicides, plant-growth regulators and/or plant nutrients are contained therein as agrochemically active compounds.

6. Compositions according to Claim 1, characterized in that imidacloprid is contained therein as agrochemically active compound.

7. Process for preparing compositions according to Claim 1, characterized in that
a)
- at least one thermoplastically processable biodegradable polyester amide, which has an average molecular weight of between 5000 and 100,000 and is derived from monomers from the groups
- of the dialcohols,
- of the trialcohols,
- of the dicarboxylic acids and their esters,
- of the hydroxycarboxylic acids,
- of the lactones,
- of the aminoalcohols,
- of the cyclic lactams,
- of the ω-aminocarboxylic acids,
- of mixtures (1:1 salts) of dicarboxylic acids and diamines and/or
- of hydroxyl- or acid-capped polyesters having molecular weights of between 200 and 10,000,
optionally in a mixture with one or more other thermoplastically processable biodegradable polymer components,
- at least one agrochemically active compound and
- optionally additives,
are mixed and heated to a temperature between 50°C and 180°C and
b) the resulting thermoplastically processable homogeneous mixture is converted into mouldings or films by extrusion.

8. Use of compositions according to Claim 1 for applying agrochemically active compounds.

## Revendications

1. Composition de traitement des plantes, constituée par
- au moins un polyesteramide biodégradable, susceptible de mise en oeuvre thermoplastique, qui présente un poids moléculaire moyen compris entre 5000 et 100 000 et qui est dérivé de monomères des groupes
- des dialcools,
- des trialcools,
- des acides dicarboxyliques et de leurs esters,
- des acides hydroxycarboxyliques,
- des lactones,
- des amino-alcools,
- des lactames cycliques,
- des acides ω-aminocarboxyliques,
- de mélanges (sels à 1:1) d'acides dicarboxyliques et de diamines
et/ou
- des polyesters à terminaison hydroxyle ou acide de poids moléculaires compris entre 200 et 10 000,
le cas échéant en mélange avec un ou plusieurs autres composants polymères biodégradables, susceptibles de mise en oeuvre thermoplastique,
- au moins une substance active agrochimique et
- le cas échéant des additifs.

2. Compositions suivant la revendication 1, caractérisées en ce que les polyesteramides qu'elles contiennent sont dérivés de monomères
- du groupe des lactames cycliques,
- du 1,4-butane-diol et de l'acide adipique et présentent une proportion d'ester comprise entre 30 et 80 % en poids.

3. Compositions suivant la revendication 1, caractérisées en ce qu'elles contiennent comme composants de mélange, biodégradables, susceptibles de mise en oeuvre thermoplastique, des polyesters, des polyéther-esters, des copolyesters, des polyanhydrides, des polyester-uréthanne-urées, des polyester-uréthannes, des polysaccharides thermoplastiques et/ou des dérivés de polysaccharides.

4. Compositions suivant la revendication 1, caractérisées en ce qu'elles contiennent comme composants de mélange, biodégradables, susceptibles de mise en oeuvre thermoplastique, des polyesters, des polyéther-esters et/ou des polyesteramides qui portent des groupes ester aliphatiques et aromatiques.

5. Compositions suivant la revendication 1, caractérisées en ce qu'elles contiennent comme substances agrochimiques des fongicides, des bactéricides, des insecticides, des acaricides, des nématicides, des herbicides, des régulateurs de croissance des plantes et/ou des substances nutritives pour les plantes.

6. Compositions suivant la revendication 1, caractérisées en ce que de l'imidaclopride est contenu comme substance active agrochimique.

7. Procédé de préparation de compositions suivant la revendication 1, caractérisé en ce qu'on mélange
a)
- au moins un polyesteramide biodégradable, susceptible de mise en oeuvre thermoplastique, qui présente un poids moléculaire moyen de 5000 à 100 000 et qui est dérivé de monomères des groupes
- des dialcools,
- des trialcools,
- des acides dicarboxyliques et de leurs esters,
- des acides hydroxycarboxyliques,
- des lactones,
- des amino-alcools,
- des lactames cycliques,
- des acides ω-aminocarboxyliques,
- de mélanges (sels à 1:1) d'acides dicarboxyliques et de diamines,
et/ou
- des polyesters à terminaison hydroxyle ou acide de poids moléculaires compris entre 200 et 10 000
le cas échéant en mélange avec un ou plusieurs autres composants polymères biodégradables, susceptibles de mise en oeuvre thermoplastique,
- au moins une substance active agrochimique et
- le cas échéant des additifs
et on chauffe le mélange à une température comprise entre 50°C et 180°C
et
b) on transforme par extrusion en corps façonnés ou en feuilles le mélange homogène produit, susceptible de mise en oeuvre thermoplastique.

8. Utilisation de compositions suivant la revendication 1, pour l'application de substances actives agrochimiques.
